# EUROPEAN PATENT SPECIFICATION

(11) **EP 2 479 818 B1**
(45) Date of publication and mention of the grant of the patent: **07.06.2017**
(21) Application number: 11192169.8
(22) Date of filing: 06.12.2011
(51) Int. Cl.: H01M 2/10, B60K 1/04

(54) **Vehicle battery case.**
Fahrzeugbatteriegehäuse
Boîtier de batterie de véhicule

(30) Priority: 21.01.2011 JP 2011010937
(43) Date of publication of application: 25.07.2012
(73) Proprietor: Mitsubishi Jidosha Kogyo Kabushiki Kaisha, Tokyo 108-8410 (JP)
(72) Inventor: LOO, Weng Leong, Tokyo, 108-8410 (JP); TAKASAKI, Seiichi, Tokyo, 108-8410 (JP)
(74) Representative: Regimbeau

(56) References cited:
- EP-A1- 2 207 224
- WO-A1-2011/086771

## Description

### BACKGROUND OF THE INVENTION

### Field of the Invention

The present invention relates to a vehicle battery case, and more specifically, to the structure of a case for storing batteries.

### Description of the Related Art

In late years, hybrid vehicles and battery cars have been widely developed, which are equipped with high-capacity batteries and use a battery-power driven motor as a running drive source.

The batteries installed in these electric-motor vehicles are stored in a battery case to maintain their capacities and output voltages. The battery case is required to have sealability to prevent rainwater or the like from leaking into the case.

The battery case is, for example, made up of a case body that is formed into a box with an open top and contains batteries, and a cover that covers the opening of the case body.

An easy method of fastening the case body and the cover together is, for example, to provide flanges to connecting portions of the case body and the cover, insert bolts into holes formed in the flanges, and fasten the flanges together with the bolts and nuts.

There is another well-known method of fastening two objects together, which arranges brackets in the opposed lateral faces of the two objects and fastens these brackets to the objects with bolts (Patent No. JP 0488900).

If the flanges are fastened with the bolts in this manner, however, it is necessary that the flanges have projection length that is long enough for the bolts to be arranged in the flanges. This is a disadvantage when a space for installing the battery case is limited as in battery cars, and the installation of high-capacity batteries is required.

If the case body and the cover are made of resin for saving weight, they may be deformed due to a temperature change at regions between the bolts. This causes the possibility of deterioration in sealability in abutting parts of the case body and the cover. The deformation can be prevented by shortening the intervals between the bolts and fastening the case body and the cover. On the other hand, the number of bolts is accordingly increased, and this increases the worker-hours for attaching and detaching the cover.

According to the above-mentioned Patent Document, since the two objects and the brackets are fastened with their respective bolts, the number of bolts is increased. It therefore takes time to attach and detach the cover, and the number of components is also increased.

### SUMMARY OF THE INVENTION

It is an object of the invention to provide a vehicle battery case whose cover is easily attachable and detachable in spite of small projection amount of a flange. In order to achieve the above object, the invention is a vehicle battery case for storing batteries for driving, which is installed in a vehicle, characterized by comprising:
a case body that stores batteries, has an opening for removing the batteries, and is provided in a rim of the opening with a case-side flange projecting outwards; a cover that covers the opening of the case body and has a cover-side flange overlapping the case-side flange; and a clamp member that clamps both the cover-side flange and the case-side flange, the vehicle battery case being characterized in that the clamp member fastens the cover and the case body together while being engaged with the cover-side flange at a first end and fixed to the case body with a bolt at a second end.

Due to the structure in which the clamp member clamps the cover-side and case-side flanges, it is not necessary to form bolt holes in the flanges, so that the projection amount of the flanges can be reduced.

The above structure in which the clamp member is engaged with the cover-side flange at the first end and fixed to the case body with the bolt at the second end moreover facilitates the attachment and detachment of the cover and reduces the number of bolts to be installed.

Preferably, a tip end of the cover-side flange has a protrusion projecting from the side opposite to a contact face in contact with the case-side flange, and a hook is formed in the clamp member so as to be hung on a depression between the protrusion and a lateral plate of the cover.

Since the hook of the clamp member is located inside the depression between the protrusion and the lateral plate of the cover, the clamp member is engaged with the cover-side flange. This eliminates the necessity of using a bolt to fasten the cover and the case body to each other, thereby facilitating the attachment and detachment of the cover and reducing the number of bolts.

Preferably, the clamp member includes an inclined face that is inclined in relation to abutting surfaces of the case-side flange and the cover-side flange; and since the clamp member is fixed to the case body with the bolt, the inclined face abuts and swages the case body, to thereby press the cover-side flange and the case-side flange against each other.

The engagement of the first end of the support clamp member with the cover-side flange and the fixing of the second end to the case body with the bolt causes the inclined face of the clamp member to abut and swage the case body, to thereby press the cover-side and case-side flanges against each other. This means that a pressing force between the cover-side and case-side flanges can be increased by adjusting an inclination angle of the inclined face. A vehicle battery case having a sufficiently high sealability can be obtained by using a small number of bolts to be installed.

Preferably, an engagement position of the clamp member with respect to the cover-side flange and an abutment position between the case body and the inclined face are situated in one plane.

Since an engaging part of the support clamp member with respect to the cover-side flange and abutting parts of the case body and the inclined face are located in one plane, a fastening force by the bolt efficiently acts upon the abutting parts of the inclined face of the support clamp member and the case body, and the pressing force between the cover-side and case-side flanges is increased with effect.

Preferably, the case-side flange is provided with a seal material on a contact surface in contact with the cover-side flange, and the engagement position of the clamp member with respect to the cover-side flange and the installation position of the seal material are situated in one plane. Since the engagement position of the clamp member with respect to the cover-side flange and the installation position of the seal material are situated in one plane, the fastening force by the bolt efficiently acts upon where the seal material is installed. In result, sealability between the contact surface of the case-side flange and that of the cover-side flange can be sufficiently ensured.

Preferably, the case body and the cover are made of resin.

Made of resin, the case body and the cover are lightweight and suitable to be installed in a vehicle. At the same time, the flanges and the like can be easily formed in a unique shape, and component fabrication is facilitated. A flexure produced in the case body and the cover by fabricating them with resin is adequately prevented if the support clamp member is made wide.

Preferably, a rib is disposed in the case body to be located on the back of where the bolt is installed.

To dispose the rib on the back of where the bolt is installed ensures a sufficient strength of the case body even if the case body is made of resin.

### BRIEF DESCRIPTION OF THE DRAWINGS

The present invention will become more fully understood from the detailed description given hereinafter and the accompanying drawings which are given by way of illustration only, and thus, are not limitative of the present invention, and wherein:
FIG. 1 is a perspective view of a battery car equipped with a battery unit according to the present invention;
FIG. 2 is a schematic view showing a configuration of the battery unit;
FIG. 3 is a longitudinal sectional view showing a structure of a fixed part of a second plate according to a first embodiment of the invention;
FIG. 4 is a longitudinal sectional view showing a structure of the fixed part of the second plate according to a second embodiment of the invention; and
FIG. 5 is a longitudinal sectional view showing a structure of the fixed part of the second plate according to a third embodiment of the invention.

### DETAILED DESCRIPTION OF THE PREFERRED EMBODIMENTS

A first embodiment of the invention will be described with reference to the attached drawings.

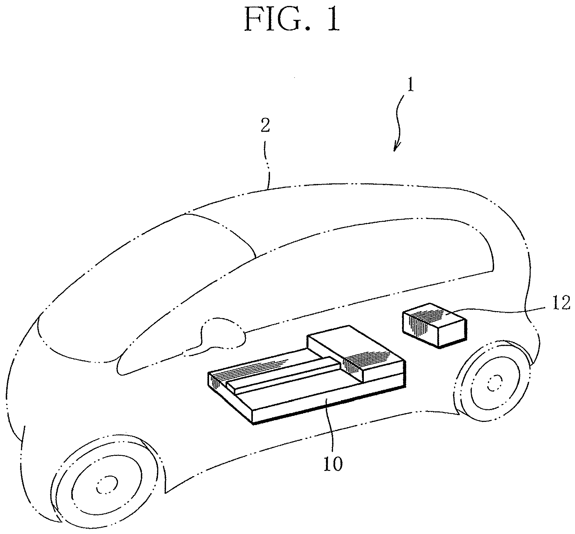

FIG. 1 is a perspective view of a battery car equipped with batteries according to the present invention.

As illustrated in FIG. 1, a battery car 1 is equipped with a battery unit 10 under the floor of a car body 2 and has a charging path, not shown, for being charged from outside. A charger 12 that receives power supply through the charging path and charges the batteries is placed in the rear part of the car body 2. The battery unit 10 is charged while connected to the charger 12. An electric motor, not shown, is actuated by using the battery unit 10 as a power source, thereby rolling tires and thus moving the battery car.

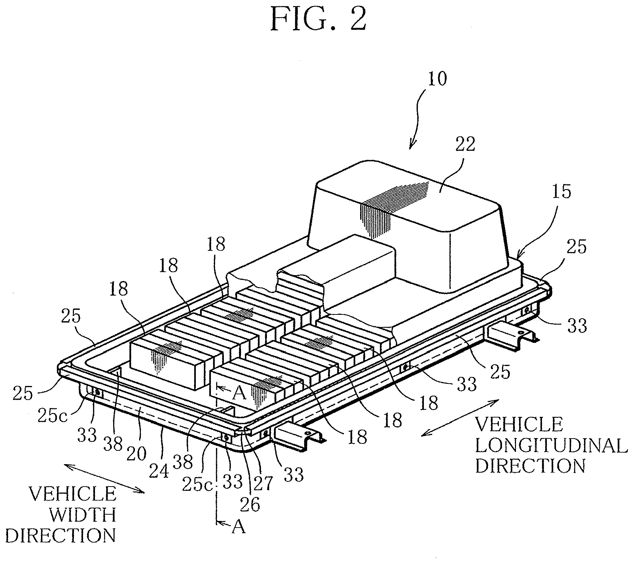

FIG. 2 is a schematic view showing a configuration of the battery unit 10.

As illustrated in FIG. 2, the battery unit 10 is constructed by storing a plurality of battery modules 18 arranged in two rows in a battery case 15. The battery case 15 is formed of a rectangular parallelepiped case body 20 with an open top, a cover 22 that covers the top of the case body 20, a first plate 24 that covers lateral faces of the case body 20, and second plates 25 (clamp member) that detachably cover abutting parts of the case body 20 and that of the cover 22. The case body 20 and the cover 22 are made of resin. The first plate 24 and the second plates 25 are made by bending sheet metal. In the first embodiment, the case body 20 and the first plate 24 correspond to the case body of the present invention.

The opening of the case body 20 has a rectangular shape. A flange 26 (case-side flange) is formed in a rim of the opening so as to project outwards. A flange 27 (cover-side flange) is formed in a rim of the cover 22 so as to overlap the flange 26 of the case body 20.

The second plates 25 each have a shape of letter "U" in section and are arranged to clamp the flange 26 of the case body 20 and the flange 27 of the cover 22. The second plates 25 expand over substantially the entire width of the flanges 26 and 27 and are provided four in total. These four second plates 25 are so arranged as to clamp substantially the whole periphery of the flanges 26 and 27.

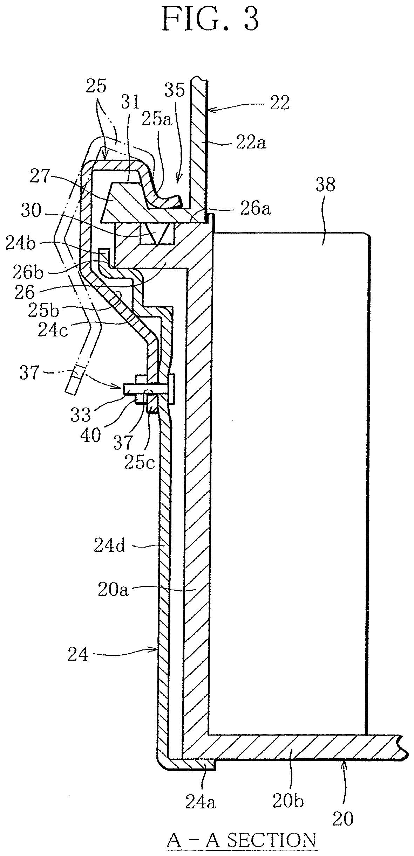

FIG. 3 is a longitudinal sectional view showing a structure of the fixed part of each of the second plates 25 according to the first embodiment of the invention.

In the first embodiment of the invention, as illustrated in FIG. 3, the flange 26 of the case body 20 is provided with a seal material 30 onto a contact surface 26a with respect to the flange 27 of the cover 22. The seal material 30 is provided to the entire rim of the opening of the case body 20.

The flange 27 of the cover 22 is provided in a tip end thereof with a protrusion 31 projecting upwards on the side opposite to a contact surface in contact with the flange 26 of the case body 20.

The first plate 24 covers a lateral plate 20a of the case body 20, and is so formed that a lower end portion 24a covers an edge of a bottom plate 20b of the case body 20. An upper part of the first plate 24 is outwardly bent under the flange 26. A tip end 24b of the upper part of the first plate 24 is projecting upwards to catch on a corner 26b located at a projecting end of the flange 26. The first plate 24 is bent in a staircase pattern under the flange 26 to have a corner 24c.

Stud bolts 33 are fixed to the first plate 24 by welding so as to protrude outwards in a lateral plate 24d located lower than the corner 24c. The stud bolts 33 are arranged in about two or three places at given intervals in a width direction.

Formed in a substantial "U" shape as mentioned above, the second plates 25 cover the flange 27 of the cover 22 including the protrusion 31 and also cover the flange 26 of the case body 20. A hook 25a is formed in an upper end portion of each of the second plates 25 so as to be hung on a depression 35 between the protrusion 31 and a lateral plate 22a of the cover 22. The second plates 25 further include an inclinedportion 25b (inclined face) extending diagonally downwards below the flange 26 and outside the corner 24c in a direction of the lateral plate 24d of the first plate 24 and abutting the corner 24c of the first plate 24.

The second plates 25 are provided in lower ends thereof with projecting portions 25c projecting downwards along the lateral plate 24d of the first plate 24 in such an arrangement that the projecting portions 25c are arranged at given intervals in a width direction correspondingly to the positions of the stud bolts 33. Each of the projecting portions 25c has a bolt hole 37 into which the corresponding stud bolt 33 can be inserted.

The case body 20 is further provided with ribs 38 on the back of where the stud bolts 33 are installed.

The procedures for fastening the case body 20 and the cover 22 together in the battery case 15 having the above-described structure will be explained below with reference to FIG. 3.

First, the cover 22 is placed on the case body 20 fitted with the first plate 24, so as to be attached over the opening.

Secondly, as shown by a chain double-dashed line in FIG. 3, the hook 25a of the upper end of the second plate 25 is hung on the depression 35 between the protrusion 31 and the lateral plate 22a of the cover 22.

The lower end of the second plate 25 is pushed toward the lateral plate 20a of the case body 20 by using the hook 25a as a pivot point. The stud bolts 33 of the first plate 24 are inserted into the bolt holes 37 of the projecting portions 25c of the second plate 25, and nuts 40 are tightened onto the stud bolts 33. In this manner, the second plate 25 is fastened to the first plate 24.

If the lower end of the second plate 25 is pushed toward the lateral plate 20a of the case body 20 as described above, the inclined portion 25b of the second plate 25 abuts the corner 24c of the first plate 24 and pushes the first plate 24 obliquely upwards.

The first plate 24 is then pressed obliquely upwards while the flange 27 is pressed downwards by the hook 25a of the upper end of the second plate 25. Consequently, the flange 26 of the case body 20 and the flange 27 of the cover 22 are pressed against each other in a vertical direction by means of the first plate 24, so that abutting surfaces of the flanges 26 and 27 thus come into tight contact with each other. The battery case 15 is tightly sealed in this manner.

In the present embodiment, the stud bolts 33 fastening the second plate 25 and the first plate 24 together are disposed under the flange 26. For that reason, it is not necessary to provide the flanges 26 and 27 with bolt holes into which bolts are inserted, thereby reducing the projection amount of the flanges 26 and 27. A space for installing the battery case 15 can therefore be reduced. This is advantageous especially when a high-capacity battery is installed as seen in a battery car.

Because of the structure in which the hook 25a of the upper end of the second plate 25 is engaged with the depression 35 of the cover 22, there is no need to use a bolt to fasten the second plate 25 and the cover 22 together, facilitating the attachment and detachment of the cover 22 and reducing the number of bolts to be installed.

By adjusting the angle of inclination of the inclinedportion 25b of the second plate 25 and the angle of abutting surfaces of the inclined portion 25b and the corner 24c of the first plate 24, the upward pressing force applied to the first plate 24 according to a tightening force of the stud bolts 33, can be arbitrarily determined. It is therefore possible to increase the upward pressing force applied to the first plate 24 according to a fastening force by the stud bolts 33. This makes it possible to adequately press the flanges 26 and 27 against each other and secure sufficient sealability.

The second plate 25 has substantially the same width as the flanges 26 and 27, so that the flanges 26 and 27 are pressed by the second plate 25 over the entire width, which prevents flexure in the flanges 26 and 27. On this account, even if the stud bolts 33 are installed in a small number of places, the flanges 26 and 27 are firmly pressed against each other, thereby enhancing the sealability of the battery case 15. In particular, when the case body 20 and the cover 22 are made of resin as in the present embodiment, flexure is liable to occur in the flanges 26 and 27. However, since the second plate 25 is wide, it is possible to reliably prevent flexure from occurring in the flanges 26 and 27.

The second plate 25 is formed virtually as wide as the abutting surface, and the engagement position of the hook 25a with respect to the flange 27 and the abutment position between the corner 24c and the inclined portion 25b are situated in one plane. For this reason, the tightening force of the stud bolts 33 is efficiently applied to the engagement position and the corner 24c, so that the pressing force between the flanges 26 and 27 can be more effectively increased.

Since the ribs 38 are disposed on the back of where the stud bolts 33 are installed, an adequate strength of the cover 22 at the fastening position is secured even if the case body 20 is made of resin.

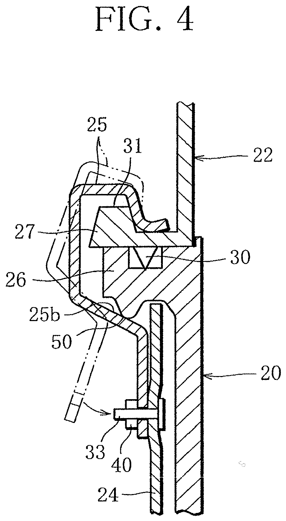

FIG. 4 is a longitudinal sectional view showing a structure of the fixed part of the second plate 25 according to a second embodiment of the invention.

Only the differences from the first embodiment will be described below.

In the second embodiment, the first plate 24 does not have the corner 24c. The flange 26 of the case body 20 is provided in an undersurface thereof with a corner 50 projecting downwards. The inclined portion 25b of the second plate 25 is located to abut the corner 50 of the flange 26.

According to the second embodiment, therefore, the pressing force is applied from the second plate 25 directly to the flange 26. It is then possible in the second embodiment to increase the upward pressing forceof the flange 26, resisting the fastening force by the stud bolts 33. As in the first embodiment, the flanges 26 and 27 are adequately pressed against each other, and sufficient sealability is secured.

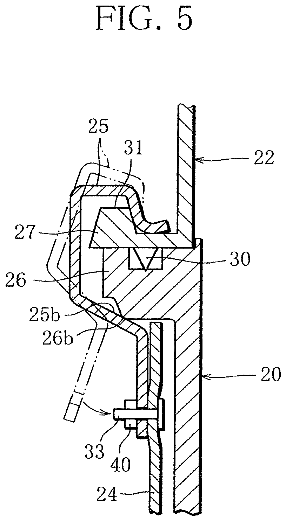

FIG. 5 is a longitudinal sectional view showing a structure of the fixed part of the second plate 25 according to a third embodiment of the invention.

The third embodiment has a structure without the corner 24c formed in the flange 26 in the second embodiment. The inclined portion 25b of the second plate 25 is designed to abut the corner 26b of the projecting end of the flange 26 of the case body 20. The above-described structure also applies the upward pressing force from the second plate 25 to the flange 26 and enables the adequate pressing between the flanges 26 and 27 as in the second embodiment.

The present embodiment uses the battery case of the invention as a battery unit for a battery car. It is also possible, however, to apply the battery case of the invention to battery cases of other vehicles, such as engine-driven vehicles, which require sealability.

## Claims

1. A vehicle battery case for storing batteries for driving (18), which is installed in a vehicle, **characterized by** comprising:
a case body (20) that stores batteries (18), has an opening for removing the batteries (18), and is provided in a rim of the opening with a case-side flange (26) projecting outwards;
a cover (22) that covers the opening of the case body (20) and has a cover-side flange (27) overlapping the case-side flange (26); and
a clamp member (25) that clamps both the cover-side flange (27) and the case-side flange (26), **characterized in that**:
the clamp member (25) fastens the cover (22) and the case body (20) together while being engaged with the cover-side flange (27) at a first end and fixed to the case body (20) with a bolt (33) at a second end.

2. The vehicle battery case according to claim 1, **characterized in that**:
a tip end of the cover-side flange (27) has a protrusion (31) projecting from the side opposite to a contact face in contact with the case-side flange (26), and
a hook (25a) is formed in the clamp member (25) so as to be hung on a depression (35) between the protrusion (31) and a lateral plate (22a) of the cover (22).

3. The vehicle battery case according to claim 1, **characterized in that**:
the clamp member (25) includes an inclined face (25b) that is inclined in relation to abutting surfaces of the case-side flange (26) and the cover-side flange (27); and
since the clamp member (25) is fixed to the case body (20) with the bolt (33), the inclined face (25b) abuts and swages the case body (20), to thereby press the cover-side flange (27) and the case-side flange (26) against each other.

4. The vehicle battery case according to claim 3, **characterized in that**:
an engagement position of the clamp member (25) with respect to the cover-side flange (27) and an abutment position between the case body (20) and the inclined face (25b) are situated in one plane.

5. The vehicle battery case according to claim 4, **characterized in that**:
the case-side flange (26) is provided with a seal material (30) on a contact surface (26a) in contact with the cover-side flange (27), and
the engagement position of the clamp member (25) with respect to the cover-side flange (27) and the installation position of the seal material (30) are situated in one plane.

6. The vehicle battery case according to claim 1, **characterized in that**:
the case body (20) and the cover (22) are made of resin.

7. The vehicle battery case according to claim 6, **characterized in that**:
a rib (38) is disposed in the case body (20) to be located on the back of where the bolt (33) is installed.

## Patentansprüche

1. Fahrzeugbatteriegehäuse zum Speichern von Batterien zum Fahren (18), das in einem Fahrzeug eingebaut ist, **gekennzeichnet durch** Umfassen:
eines Gehäusekörpers (20), der Batterien (18) speichert, eine Öffnung zum Entfernen der Batterien (18) hat und in einem Rand der Öffnung mit einem gehäuseseitigen Flansch (26) bereitgestellt ist, der auswärts hervorsteht;
eine Abdeckung (22), die die Öffnung des Gehäusekörpers (20) abdeckt und einen gehäuseseitigen Flansch (27) hat, der den gehäuseseitigen Flansch (26) überlappt; und
ein Zwingenorgan (25), das sowohl den gehäuseseitigen Flansch (27) als auch den gehäuseseitigen Flansch (26) einklemmt, **dadurch gekennzeichnet, dass**:
das Zwingenorgan (25) die Abdeckung (22) und den Gehäusekörper (20) miteinander befestigt und dabei gleichzeitig mit dem gehäuseseitigen Flansch (27) an einem ersten Ende zum Eingreifen kommt und auf dem Gehäusekörper (20) mit einem Bolzen (33) an einem zweiten Ende befestigt ist.

2. Fahrzeugbatteriegehäuse gemäß Anspruch 1, **dadurch gekennzeichnet, dass**:
ein Füllende des gehäuseseitigen Flansches (27) einen Vorsprung (31) hat, der aus der Seite hervorspringt, die einer Kontaktseite gegenüberliegt, die in Kontakt mit dem gehäuseseitigen Flansch (26) ist, und
ein Haken (25a) in dem Klemmenorgan (25) derart gebildet ist, dass es über einer Vertiefung (35) zwischen dem Vorsprung (31) und einer lateralen Platte (22a) der Abdeckung (22) aufgehängt ist.

3. Fahrzeugbatteriegehäuse gemäß Anspruch 1, **dadurch gekennzeichnet, dass**:
das Zwingenorgan (25) eine geneigte Seite (25b) einschließt, die in Relation zu den angrenzenden Flächen des gehäuseseitigen Flansches (26) und des gehäuseseitigen Flansches (27) geneigt ist; und
da das Zwingenorgan (25) mit dem Bolzen (33) an dem Gehäusekörper (20) befestigt ist, grenzt die geneigte Fläche (25b) an den Gehäusekörper (20) an und staucht ihn, um dadurch den gehäuseseitigen Flansch (27) und den gehäuseseitigen Flansch (26) gegeneinander zu drücken

4. Fahrzeugbatteriegehäuse gemäß Anspruch 3, **dadurch gekennzeichnet, dass**:
eine Eingreifposition des Zwingenorgans (25) in Bezug auf den gehäuseseitigen Flansch (27) und eine angrenzende Position zwischen dem Gehäusekörper (20) und der geneigten Seite (25b) sich in einer Ebene befinden.

5. Fahrzeugbatteriegehäuse gemäß Anspruch 4, **dadurch gekennzeichnet, dass**:
der gehäuseseitige Flansch (26) mit einem Versiegelungsmaterial (30) auf einer Kontaktfläche (26a) in Kontakt mit dem gehäuseseitigen Flansch (27) bereitgestellt ist, und
die Eingreifposition des Zwingenorgans (25) in Bezug auf den gehäuseseitigen Flansch (27) und die Einbauposition des Versiegelungsmaterials (30) sich in einer Ebene befinden.

6. Fahrzeugbatterie gemäß Anspruch 1, **dadurch gekennzeichnet, dass**:
der Gehäusekörper (20) und die Abdeckung (22) aus Harz hergestellt sind.

7. Fahrzeugbatteriegehäuse gemäß Anspruch 6, **dadurch gekennzeichnet, dass**:
eine Rippe (38) in dem Gehäusekörper (20) angeordnet ist, um sich auf der Rückseite dort zu befinden, wo der Bolzen (33) eingebaut ist.

## Revendications

1. Boîtier de batterie de véhicule destiné à stocker des batteries pour entraînement (18), qui est installé dans un véhicule, **caractérisé en ce qu'**il comprend :
un corps (20) de boîtier qui stocke des batteries (18), comporte une ouverture pour retirer les batteries (18), et est pourvu, dans un rebord de l'ouverture, d'une bride (26) côté boîtier faisant saillie vers l'extérieur ;
un couvercle (22) qui couvre l'ouverture du corps (20) de boîtier et comporte une bride (27) côté couvercle chevauchant la bride (26) côté boîtier ; et
un élément de serrage (25) qui serre à la fois la bride (27) côté couvercle et la bride (26) côté boîtier, **caractérisé en ce que** :
l'élément de serrage (25) fixe le couvercle (22) et le corps (20) de boîtier ensemble tout en entrant en prise avec la bride (27) côté couvercle au niveau d'une première extrémité et fixé au corps (20) de boîtier à l'aide d'un boulon (33) au niveau d'une seconde extrémité.

2. Boîtier de batterie de véhicule selon la revendication 1, **caractérisé en ce que** :
une extrémité de pointe de la bride (27) côté couvercle comporte une saillie (31) faisant saillie depuis le côté opposé à une face de contact en contact avec la bride (26) côté boîtier, et
un crochet (25a) est formé dans l'élément de serrage (25) de manière à être accroché sur un renfoncement (35) entre la saillie (31) et une plaque latérale (22a) du couvercle (22).

3. Boîtier de batterie de véhicule selon la revendication 1, **caractérisé en ce que** :
l'élément de serrage (25) inclut une face inclinée (25b) qui est inclinée par rapport à des surfaces en about de la bride (26) côté boîtier et de la bride (27) côté couvercle ; et
étant donné que l'élément de serrage (25) est fixé au corps (20) de boîtier à l'aide du boulon (33), la face inclinée (25b) bute contre et sertit le corps (20) de boîtier, pour presser ainsi la bride (27) côté couvercle et la bride (26) côté boîtier l'une contre l'autre.

4. Boîtier de batterie de véhicule selon la revendication 3, **caractérisé en ce que** :
une position d'entrée en prise de l'élément de serrage (25) par rapport à la bride (27) côté couvercle et une position de butée entre le corps (20) de boîtier et la face inclinée (25b) sont situées dans un même plan.

5. Boîtier de batterie de véhicule selon la revendication 4, **caractérisé en ce que** :
la bride (26) côté boîtier est pourvue d'un matériau de joint (30) sur une face de contact (26a) en contact avec la bride (27) côté couvercle, et
la position d'entrée en prise de l'élément de serrage (25) par rapport à la bride (27) côté couvercle et la position d'installation du matériau de joint (30) sont situées dans un même plan.

6. Boîtier de batterie de véhicule selon la revendication 1, **caractérisé en ce que** :
le corps (20) de boîtier et le couvercle (22) se composent de résine.

7. Boîtier de batterie de véhicule selon la revendication 6, **caractérisé en ce que** :
une nervure (20) est disposée dans le corps (20) de boîtier pour se situer sur l'arrière d'où le boulon (33) est installé.
